# EUROPÄISCHE PATENTSCHRIFT

(11) **EP 2 849 582 B1**
(45) Veröffentlichungstag und Bekanntmachung des Hinweises auf die Patenterteilung: **02.08.2017**
(21) Anmeldenummer: 13722745.0
(22) Anmeldetag: 14.05.2013
(51) Int. Cl.: A23L 5/47, A23L 2/58, A23L 2/39, C09C 1/36

(54) **FARBSTABILE ZUSAMMENSETZUNGEN MIT TITANDIOXID**
COLOUR-STABLE COMPOSITIONS COMPRISING TITANIUM DIOXIDE
COMPOSITION DE COULEUR SOLIDE AU DIOXYDE DE TITANE

(30) Priorität: 15.05.2012 EP 12003833
(43) Veröffentlichungstag der Anmeldung: 25.03.2015
(73) Patentinhaber: Symrise AG, 37603 Holzminden (DE)
(72) Erfinder: SCHRADER, Dirk, 37603 Holzminden (DE); BALKE, Daniel, 37639 Bevern (DE); GRUBER, Eric, 37603Holzminden (DE); RABE, Burghard, 37627 Stadtoldendorf (DE)
(74) Vertreter: Copsey, Timothy Graham
(86) Internationale Anmeldenummer: PCT/EP2013/059891
(87) Internationale Veröffentlichungsnummer: WO 2013/171187

(56) Entgegenhaltungen:
- EP-A1- 0 029 473
- WO-A1-00/03609
- WO-A1-2005/113686
- DE-A1- 2 542 197
- US-A- 3 658 552

## Beschreibung

### Gebiet der Erfindung

Die Erfindung befindet sich auf dem Gebiet der Farbstoffzusammensetzungen und betrifft Nahrungsmittel, insbesondere Getränkepulver und daraus hergestellte Getränke unter Verwendung der Farbstoffzusammensetzungen.

### Stand der Technik

Lebensmittel werden zur Verbesserung der optischen Wahrnehmung gefärbt. Eine große Herausforderung ist insbesondere die Färbung von Getränkepulvern und daraus hergestellter Getränke. Oftmals sollen die aus den Getränkepulvern hergestellten Getränke neben einer Färbung auch eine Trübung aufweisen.

Der Stand der Technik umfasst Lösungen, die zur Darstellung von Trübungen in Getränken angewendet werden können. So werden in EP 0029473 A1 (General Foods) Trübungsagenzien offenbart, die aus Titandioxid, Maltodextrin und Xanthan bestehen. Diese Trübungsagenzien werden in trockenen Getränkepulvern eingesetzt, die zudem Zucker, Lebensmittelsäuren, Aromen und Farbstoffe enthalten. WO 2005/113686 offenbart Titandioxidpartikel, die mit FD&C Blue als Lebensmittelfarbstoff verlackt sind. Diese Partikel eignen sich zur Verwendung in Nahrungsmitteln. Nachteilig an Titandioxid ist jedoch die Neigung zu Verfärbungen, die insbesondere unter Lichteinwirkung auftreten können. Die Lichteinwirkung tritt insbesondere bei kleinen abgepackten Portionen im Supermarkt auf. Weitere Ursachen für Verfärbungen sind die Einwirkung von Reduktionsmitteln auf Titandioxid, die bei zusätzlicher Anwesenheit von Säuren nochmals verstärkt wird. Reduktionsmittel und Säuren sind sehr häufig weitere Bestandteile von Getränkepulvern.

Getränkepulver mit Titandioxid oder die daraus hergestellten Getränke weisen daher nach längerer Lagerung bzw. Standzeit oftmals einen unerwünschten Grauschleier auf. Titandioxid ist jedoch auch dafür bekannt, unter Lichteinwirkung Reaktionen zu begünstigen. Dies führt insbesondere zum Abbau empfindlicher Aromastoffe.

Das ständige Bestreben nach hohen Massendurchsätzen bei der Herstellung von Getränkepulvern und die damit verbundenen hohen Geschwindigkeiten begünstigen somit den Verschleiß von Maschinenbauteilen. Dieser Verschleiß verursacht nicht nur höhere Wartungskosten, sondern stellt auch eine Quelle von Verunreinigungen für Lebensmittel dar. Außerdem gibt es Feststoffe, wie beispielsweise Tricalciumphosphat, die in Wasser mit neutralem pH-Wert als Trübungsmittel dienen können, die jedoch im sauren pH-Bereich eine erhöhte Wasserlöslichkeit aufweisen und deshalb keine stabilen Trübungen bilden. Zudem erscheint die Farbgebung des Getränkepulvers oder des daraus bereiteten Getränks oft uneinheitlich oder schwach.

Eine erste Aufgabe der vorliegenden Erfindung hat daher darin bestanden, Farbstoffzusammensetzungen bereitzustellen, die zusätzlich zur Farbgebung auch einen Trübungseindruck in Lebensmitteln hervorrufen.

Weitere Aufgaben waren, Getränkepulvern und den daraus hergestellten Getränken gleichzeitig
- eine hohe und reproduzierbare Farbintensität,
- eine hohe Stabilität gegenüber hoher Luftfeuchte,
- eine hohe Sedimentationsstabilität in dem aus dem Getränkepulver hergestellten Getränk,
- eine erhöhte Lagerstabilität auf, und insbesondere
- eine verminderte Neigung zur Bildung unerwünschter Farb- und Aromaveränderungen
zu verleihen.

Selbstverständlich sollten die Farbstoffzubereitungen physiologisch unbedenklich sein und darüber hinaus eine geringe Abrasivität zeigen, um den Verschleiß von Maschinen und die Gefahr der Verunreinigung von Lebensmitteln mit Maschinenabrieb zu verringern. Zudem sollten die Farbstoffzusammensetzungen die Instanteigenschaften von Getränkepulvern, d.h. insbesondere die schnelle Löslichkeit und Dispergierbarkeit verbessern sowie die Verklumpungsneigung verringern.

### Beschreibung der Erfindung

Gegenstand der Erfindung sind Zusammensetzungen umfassend oder bestehend aus
(a) Titandioxid und
(b) mindestens einem Lebensmittelfarbstoff, wodurch die Titandioxidpartikel wenigstens anteilig mit dem Lebensmittelfarbstoff beschichtet vorliegen. Die Erfindung betrifft Zusammensetzungen die dadurch erhältlich sind oder erhalten werden, dass die Titandioxidpartikel und die Lebensmittelfarbstoffe in Gegenwart von Wasser einer Sprühtrocknung unterworfen werden. Dabei ist es im Hinblick auf die Eigenschaften der so beschichteten Partikel von Vorteil, wenn die Hülle keine Reduktionsmittel und auch keine Säuren enthält.

Unter anteiliger Beschichtung ist zu verstehen, dass alle oder nur ein Teil der Titandioxidpartikel, vorzugsweise mehr als etwa 50 Gew.-%, besonders bevorzugt mehr als etwa 75 Gew.-%, insbesondere mehr als etwa 90 Gew.-% und ganz besonders bevorzugt etwa 95 bis etwa 99,5 Gew.-% mit mindestens einem Lebensmittelfarbstoff beschichtet oder von diesem eingehüllt wird.

Überraschenderweise wurde gefunden, dass durch einfache Sprühtrocknung von Lösungen oder Dispersionen, die Titandioxid und Lebensmittelfarbstoffe sowie gegebenenfalls weitere Formulierungsbestandteile aufweisen, ein Überzug auf den Titandioxidpartikeln entsteht und die so beschichteten Partikel über wesentlich verbesserte Eigenschaften gegenüber gleichartigen Formulierungen besitzen, in denen die gleichen Bestandteile in gleichen Mengen nebeneinander vorliegen. Insbesondere wird das eingangs geschilderte komplexe Anforderungsprofil vollumfänglich erfüllt.

### Titandioxid

Titandioxid hat als Weißpigment ein weites Einsatzgebiet, daher werden weltweit pro Jahr vier bis fünf Millionen Tonnen produziert. Titandioxid kommt in der Natur in drei Modifikationen vor:
- Rutil ist ein tetragonales Mineral von meist prismatischem Habitus;
- Anatas bildet tetragonale holoedrische Kristalle und wandelt sich bei 700 °C, abhängig von der Atmosphäre und Fremdionen, irreversibel in Rutil um;
- Brookit bildet orthorhombische Minerale und geht unterhalb des Schmelzpunktes in Rutil über.

Aus anwendungstechnischer Sicht hat es sich als vorteilhaft erwiesen, wenn das Titandioxid in der Anatasform eingesetzt wird.

### Lebensmittelfarbstoffe

Lebensmittelfarbstoffe im Sinne der Erfindung sind insbesondere wasserlösliche Lebensmittelfarbstoffe, bevorzugt Frucht-und Pflanzenextrakte, wie z. B. Extrakte aus Möhren, Karotten, Roter Bete, Holunder, Hibiskus, Paprika, roten Weintrauben, Gelbwurz, Spinat, Brennnessel und Aronia sowie
- E 100: - Kurkumin
- E 101: - Riboflavin
- E 102: - Tartrazin
- E 104: - Chinolingelb
- E 110: - Gelborange S
- E 120: - Echtes Karmin
- E 122: - Azorubin
- E 123: - Amaranth
- E 124: - Cochenillerot A
- E 127: - Erythrosin
- E 129: - Allurarot AC
- E 131: - Patentblau V
- E 132: - Indigotin
- E 133: - Brillantblau FCF
- E 140: - Chlorophylle
- E 141: - Kupferkomplexe der Chlorophylle
- E 142: - Grün S
- E 150 a: - Zuckerkulör
- E 150 b: - Sulfitlaugen-Zuckerkulör
- E 150 c: - Ammoniak-Zuckerkulör
- E 150 d: - Ammoniumsulfit-Zuckerkulör
- E 151: - Brillantschwarz FCF
- E 153: - Pflanzenkohle
- E 154: - Braun FK
- E 155: - Braun HT
- E 160 a: - Carotin
- E 160 b: - Annatto
- E 160 c: - Capsanthin
- E 160 d: - Lycopin
- E 160 e: - Beta-apo-8-Carotinal (C30)
- E 160 f: - Beta-apo-8'-Carotinsäure-Ethylester (C30)
- E 161 b: - Lutein
- E 161 g: - Canthaxanthin
- E 162: - Betanin
- E 163: - Anthocyane, Enocianin
- E 180: - Litholrubin BK

### Trübungsmittel

In einer weiteren Ausführungsform der Erfindung können die Zubereitungen als fakultative Komponente (c) mindestens ein Trübungsmittel enthalten, die ausgewählt sind aus der Gruppe, die gebildet wird von Erdalkaliphosphaten, Siliziumdioxid, Silikaten und deren Gemischen. Besonders bevorzugt ist der Einsatz von Tricalciumphosphat.

### Bindemittel

In einer weiteren Ausführungsform der Erfindung können die Zubereitungen als fakultative Komponente (d) mindestens ein Bindemittel enthalten, die ausgewählt sind aus der Gruppe, die gebildet wird von Dextrinen, Maltodextrinen, Gummi Arabicum, Xanthan sowie deren Mischungen.

### Zusammensetzungen

Die erfindungsgemäßen Zusammensetzungen können die zwingenden Bestandteile (a) und (b) sowie die optionalen Zusatzstoffe (c) und (d) in den folgenden Mengen enthalten:
(a) etwa 10 bis etwa 85 Gew.-%, vorzugsweise etwa 20 bis etwa 70 Gew.-% und insbesondere etwa 25 bis etwa 50 Gew.-% Titandioxid,
(b) etwa 0,5 bis 20 Gew.-%, vorzugsweise etwa 1 bis etwa 15 Gew.-% und insbesondere etwa 5 bis etwa 10 Gew.-% Lebensmittelfarbstoff,
(c) 0 bis etwa 75 Gew.-%, vorzugsweise 1 bis etwa 60 Gew.-% und insbesondere etwa 10 bis etwa 50 Gew.-% Trübungsmittel, und
(d) 0 bis 20 Gew.-%, vorzugsweise etwa 1 bis etwa 15 Gew.-% und insbesondere etwa 5 bis etwa 10 Gew.-% Bindemittel.

Dabei besteht die Maßgabe, dass sich die Mengenangaben gegebenenfalls mit Wasser zu 100 Gew.-% addieren. Vorzugsweise liegt der Wassergehalt bei etwa 0,5 bis etwa 10 und insbesondere bei etwa 1 bis etwa 2 Gew.-%.

### Nahrungsmittel

Ein weiterer Gegenstand der vorliegenden Erfindung betrifft Nahrungsmittel, die eine der erfindungsgemäßen Formulierungen enthalten.

Der Begriff Lebensmittel kann dabei weit aufgefasst werden, d.h. grundsätzlich handelt es sich um Backwaren, beispielsweise Brot, Trockenkekse, Kuchen, sonstiges Gebäck, Süßwaren (beispielsweise Schokoladen, Schokoladenriegelprodukte, sonstige Riegelprodukte, Fruchtgummi, Hart- und Weichkaramellen, Kaugummi), alkoholische oder nicht-alkoholische Getränke (beispielsweise Kaffee, Tee, Eistee, Wein, weinhaltige Getränke, Bier, bierhaltige Getränke, Liköre, Schnäpse, Weinbrände, (carbonisierte) fruchthaltige Limonaden, (carbonisierte) isotonische Getränke, (carbonisierte) Erfrischungsgetränke, Nektare, Schorlen, Obst- und Gemüsesäfte, Frucht- oder Gemüsesaftzubereitungen, Instantgetränke (beispielsweise Instant-Kakao-Getränke, Instant-Tee-Getränke, Instant-Kaffeegetränke, Instant-Fruchtgetränke), Fleischprodukte (beispielsweise Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (beispielsweise Frühstückscerealien, Müsliriegel, vorgegarte Fertigreis-Produkte), Milchprodukte (beispielsweise Milchgetränke, Buttermilchgetränke, Milcheis, Joghurt, Kefir, Frischkäse, Weichkäse, Hartkäse, Trockenmilchpulver, Molke, Molkegetränke, Butter, Buttermilch, teilweise oder ganz hydrolisierte Milchprotein-haltige Produkte), Produkte aus Sojaprotein oder anderen Sojabohnen-Fraktionen (beispielsweise Sojamilch und daraus gefertigte Produkte, Fruchtgetränke mit Sojaprotein, Sojalecithin-haltige Zubereitungen, fermentierte Produkte wie Tofu oder Tempe oder daraus gefertigte Produkte), Produkte aus anderen pflanzlichen Proteinquellen, beispielsweise Haferprotein-Getränke, Fruchtzubereitungen (beispielsweise Konfitüren, Fruchteis, Fruchtsoßen, Fruchtfüllungen), Gemüsezubereitungen (beispielsweise Ketchup, Soßen, Trockengemüse, Tiefkühlgemüse, vorgegarte Gemüse, eingekochte Gemüse), Knabberartikel (beispielsweise gebackene oder frittierte Kartoffelchips oder Kartoffelteigprodukte, Extrudate auf Mais- oder Erdnussbasis), Produkte auf Fett- und Ölbasis oder Emulsionen derselben (beispielsweise Mayonnaise, Remoulade, Dressings), sonstige Fertiggerichte und Suppen (beispielsweise Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

Die Erfindung hat jedoch eine besondere Bedeutung für flüssige Getränkezubereitungen bzw. Getränkepulver, die beim Auflösen verzehrfähige Zubereitungen ergeben.

Die erfindungsgemäßen Nahrungsmittel im allgemeinen und die Getränkezubereitungen im Besonderen können des Weiteren für sie typische Hilfs- und Zusatzstoffe, insbesondere Süßstoffe, Lebensmittelsäuren, Säureregulatoren, Verdickungsmittel, Reduktionsmittel, Aromastoffen und deren Mischungen in Mengen von etwa 1 bis etwa 20 Gew.-%, vorzugsweise etwa 2 bis etwa 10 Gew.-% aufweisen, als da beispielsweise sind:

### 1. Süßstoffe

Als Süßstoffe oder süß schmeckende Zusatzstoffe kommen zunächst Kohlenhydrate und speziell Zucker in Frage, wie etwa Sucrose/Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, L-Arabinose, D-Ribose, D-Glycerinaldehyd, oder Maltodextrin. Ebenfalls geeignet sind pflanzliche Zubereitungen, die diese Stoffe enthalten, beispielsweise auf Basis von Zuckerrüben (Beta vulgaris ssp., Zuckerfraktionen, Zuckersirup, Melasse), Zuckerrohr (Saccharum officinarum ssp., Melasse, Zuckerrohrsirup), Ahornsirup (Acer ssp.) oder Agaven (Agavendicksaft).

In Betracht kommen auch
- synthetische, d.h. in der Regel enzymatisch hergestellte Stärke oder Zuckerhydrolysate (Invertzucker, Fructosesirup);
- Fruchtkonzentrate (z.B. auf Basis von Äpfeln oder Birnen);
- Zuckeralkohole (z.B. Erythritol, Threitol, Arabitol, Ribotol, Xylitol, Sorbitol, Mannitol, Dulcitol, Lactitol);
- Proteine (z.B. Miraculin, Monellin, Thaumatin, Curculin, Brazzein);
- Süßstoffe (z.B. Magap, Natriumcyclamat, Acesulfam K, Neohesperidin Dihydrochalcon, Saccharin Natriumsalz, Aspartam, Superaspartam, Neotam, Alitam, Sucralose, Stevioside, Rebaudioside, Lugduname, Carrelame, Sucrononate, Sucrooctate, Monatin, Phenylodulcin);
- Süß schmeckende Aminosäuren (z.B. Glycin, D-Leucin, D-Threonin, D-Asparagin, D-Phenylalanin, D-Tryptophn, L-Prolin);
- Weitere süß schmeckende niedermolekulare Substanzen, wie z.B. Hernandulcin, Dihydrochalconglykoside, Glycyrrhizin, Glycerrhetinsäure, ihre Derivate und Salze, Extrakte von Lakritz (Glycyrrhizza glabra ssp.), Lippia dulcis Extrakte, Momordica ssp. Extrakte oder
- Einzelsubstanzen wie z.B. Momordica grosvenori [Luo Han Guo] und die daraus gewonnenen Mogroside, Hydrangea dulcis oder Stevia ssp. (z.B. Stevia rebaudiana) Extrakte.

### 2. Lebensmittelsäuren

Die Nahrungsmittel können Carbonsäuren enthalten. Säuren im Sinne der Erfindung sind bevorzugt in Lebensmitteln zulässige Säuren, insbesondere die hier genannten:
- E 260: - Essigsäure
- E 270: - Milchsäure
- E 290: - Kohlendioxid
- E 296: - Apfelsäure
- E 297: - Fumarsäure
- E 330: - Citronensäure
- E 331: - Natriumcitrat
- E 332: - Kaliumcitrat
- E 333: - Calciumcitrat
- E 334: - Weinsäure
- E 335: - Natriumtartrat
- E 336: - Kaliumtartrat
- E 337: - Natrium-Kaliumtartrat
- E 338: - Phosphorsäure
- E 353: - Metaweinsäure
- E 354: - Calciumtartrat
- E 355: - Adipinsäure
- E 363: - Bernsteinsäure
- E 380: - Triammoniumcitrat
- E 513: - Schwefelsäure
- E 574: - Gluconsäure
- E 575: - Glucono-delta-Lacton

### 3. Säureregulatoren

Säureregulatoren sind Lebensmittelzusatzstoffe, die den Säuregrad oder die Basizität und damit den gewünschten pH-Wert eines Lebensmittels konstant halten. Es handelt sich meist um organische Säuren und deren Salze, Carbonate, seltener auch um anorganische Säuren und deren Salze. Der Zusatz eines Säureregulators verstärkt teils die Stabilität und Festigkeit des Lebensmittels, bewirkt eine erwünschte Ausfällung und verbessert die Wirkung von Konservierungsmitteln. Im Gegensatz zu Säuerungsmitteln werden sie nicht zur Geschmacksveränderung von Lebensmitteln benutzt. Ihre Wirkung beruht auf der Bildung eines Puffersystems im Lebensmittel, bei dem sich auf Zugabe von sauren oder basischen Stoffen der pH-Wert nicht oder nur geringfügig ändert. Beispiele sind:
- E 170: - Calciumcarbonat
- E 260-263: - Essigsäure und Acetate
- E 270: - Milchsäure
- E 296: - Äpfelsäure
- E 297: - Fumarsäure
- E 325-327: - Lactate (Milchsäure)
- E 330-333: - Citronensäure und Citrate
- E 334-337: - Weinsäure und Tartrate
- E 339-341: - Orthophosphate
- E 350-352: - Malate (Äpfelsäure)
- E 450-452: - Di-, Tri- und Polyphosphate
- E 500-504: - Carbonate (Kohlensäure)
- E 507: - Salzsäure und ChlorideE 513-517Schwefelsäure und Sulfate
- E 524-528: - Hydroxide
- E 529-530: - Oxide
- E 355-357: - Adipinsäure und Adipate
- E 574-578: - Gluconsäure und Gluconate

### 4. Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder Ionenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400: - Alginsäure
- E 401: - Natriumalginat
- E 402: - Kaliumalginat
- E 403: - Ammoniumalginat
- E 404: - Calciumalginat
- E 405: - Propylenglycolalginat
- E 406: - Agar Agar
- E 407: - Carrgeen, Furcelleran
- E 407: - Johannisbrotkernmehl
- E 412: - Guarkernmehl
- E 413: - Traganth
- E 414: - Gummi arabicum
- E 415: - Xanthan
- E 416: - Karaya (Indischer Traganth)
- E 417: - Tarakernmehl (Peruanisches Johannisbrotkernmehl)
- E 418: - Gellan
- E 440: - Pektin, Opekta
- E 440ii: - Amidiertes Pektin
- E 460: - Mikrokristalline Cellulose, Cellulosepulver
- E 461: - Methylcellulose
- E 462: - Ethylcellulose
- E 463: - Hydroxypropylcellulose
- E 465: - Methylethylcellulose
- E 466: - Carboxymethylcellulose, Natriumcarboxymethylcellulose

### 5. Reduktionsmittel

Die Lebensmittel können des Weiteren auch Reduktionsmittel aufweisen. Reduktionsmittel im Sinne der Erfindung sind bevorzugt in Lebensmitteln zulässige Reduktionsmittel, insbesondere die hier genannten:
- E 220: - Schwefeldioxid
- E 221: - Natriumsulfit
- E 222: - Natriumhydrogensulfit
- E 223: - Natriumdisulfit
- E 224: - Kaliumdisulfit
- E 226: - Calciumsulfit
- E 227: - Calciumhydrogensulfit
- E 228: - Kaliumhydrogensulfit
- E 300: - Ascorbinsäure
- E 301: - Natrium-L-Ascorbat
- E 302: - Calium-L-Ascorbat
- E 304: - Ascorbinsäureester
- E 306: - Tocopherol
- E 307: - Alpha-Tocopherol
- E 308: - Gamma-Tocopherol
- E 309: - Delta-Tocopherol
- E 310: - Propylgallat
- E 311: - Octylgallat
- E 312: - Dodecylgallat
- E 315: - Isoascorbinsäure
- E 316: - Natriumisoascorbat
- E 319: - tert.-Butylhydrochinon (TBHQ)
- E 320: - Butylhydroxianisol
- E 321: - Butylhydroxitoluol
- E 322: - Lecithin
- E 330: - Citronensäure
- E 512: - Zinn-II-Chlorid

### 6. Aromastoffe

Die Erfindung erlaubt insbesondere auch den Einsatz von Aromastoffen mit Ester-, Aldehyd- oder Lactonstruktur, die in Gegenwart von Titandioxid und unter Lichteinfluss besonders schnell abgebaut werden. Die Erfindung sorgt somit auch für eine verbesserte Stabilität, speziell Lagerstabilität der Aromastoffe.

Die erfindungsgemäßen oralen Zubereitungen können einen oder mehrere Aromastoffe enthalten. Typische Beispiele umfassen: Acetophenon, Allylcapronat, alpha-Ionon, betalonon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Portionsbehälter

Ein weiterer Gegenstand der Erfindung betrifft einen Portionsbehälter mit einem Fassungsvermögen von etwa 0,5 bis etwa 500 g, vorzugsweise etwa 1 bis etwa 250 g und insbesondere etwa 5 bis etwa 100 g, der eine der erfindungsgemäßen Zubereitungen enthält, wobei vorzugsweise mindestens eine Wand des Portionsbehälters lichtdurchlässig sein kann, da sich die erfindungsgemäßen Zubereitung ja im Gegensatz zum Stand der Technik durch eine besondere Farbstabilität auch bei Lichteinfluss auszeichnen.

### Verfahren und Verwendung

Ein weiterer Gegenstand der Erfindung betrifft des Weiteren ein Verfahren zur Herstellung der erfindungsgemäßen Zusammensetzungen, bei dem man Titandioxidpartikel, vorzugsweise solche die in der Anataseform vorliegen, mit mindestens einem Lebensmittelfarbstoff und in Gegenwart von Wasser einer Sprühtrockung unterwirft. Dazu können die zu trocknenden Lösungen bzw. Dispersionen etwa 0,5 bis etwa 50, insbesondere etwa 1 bis etwa 40 und besonders bevorzugt etwa 2 bis etwa 10 Gew.-% Wasser enthalten.

Die Trocknung kann in an sich bekannter Weise so etwa in der Wirbelschicht bei Temperaturen im Bereich von etwa 100 bis etwa 180 °C, vorzugsweise etwa 120 bis etwa 150 °C durchgeführt werden. Üblicherweise werden die Bestandteile - also Titandioxid, Lebensmittelfarbstoffe sowie gegebenenfalls Trübungs- und Bindemittel - gemeinsam verdüst, wobei die Titandioxidpartikel mit den anderen Bestandteilen beschichtet werden. Die sprühgetrockneten Produkte können wasserfrei sein oder vorzugsweise noch etwa 0,5 bis etwa 10 Gew.-%, und insbesondere noch etwa 1 bis etwa 2,5 Gew.-% Wasser gebunden enthalten. Ein gewisser Wassergehalt ist vorteilhaft, weil sich die Zubereitungen durch eine besondere Brillanz auszeichnen, ein zu hoher Gehalt erhöht indes die Klebrigkeit der Produkte. Nach der Sprühtrocknung liegen die Zubereitungen in stückiger Form, vorzugsweise als trockene Pulver vor.

Ein weiterer Gegenstand der Erfindung betrifft auch ein Verfahren zur Färbung von Lebensmitteln, bei dem man ein diese mit einer erfindungsgemäßen Zusammensetzung vermischt und anschließend in einen Portionsbehälter abfüllt.

Schließlich umfasst die Erfindung auch die Verwendung einer der erfindungsgemäßen Zusammensetzungen zur Färbung von Lebensmitteln, speziell Getränkezubereitungen, seien sie flüssig oder pulverförmig.

### Beispiele

### Herstellbeispiele 1 bis 3

In der folgenden **Tabelle 1** sind drei erfindungsgemäße Zusammensetzung wiedergegeben. Zur Herstellung wurden die Inhaltsstoffe unter intensivem Rühren in 1700 g Wasser gelöst bzw. dispergiert und anschließend in einem Sprühturm vom Typ Niro Minor getrocknet. Das Produkt B1 enthielt danach noch 2,1 Gew.-%, B2 3,3 Gew.-% und B3 2,8 Gew.-% Restwasser.

**Tabelle 1**

| Zusammensetzung der Zubereitungen | | | |
|---|---|---|---|
| **Inhaltsstoff** | **B1** | **B2** | **B3** |
| Titandioxid | 841 | 300 | 300 |
| Tricalciumphosphat | 0 | 541 | 481 |
| Gummi Arabicum | 0 | 0 | 60 |
| Gelborange E 110 | 53 | 53 | 53 |
| Tartrazin E 102 | 106 | 106 | 106 |

### Vergleichsbeispiele V1 bis V3

Die Rezepturen der Beispiele 1-3 wurden verwendet, um die vergleichenden Beispiele V1, V2 und V3 herzustellen. (Die Rezeptur V1 entspricht der Rezeptur von Beispiel B1 usw.) In den Vergleichsversuchen wurden die Produkte jedoch nicht mit Wasser vermischt und sprühgetrocknet, sondern in einem Pulvermischer gemischt.

### Sensorische Prüfung

Einem geschulten Panel wurden die Produkte B1 bis B3 sowie die vergleichenden Beispiele V1 bis V3 zur Bewertung mit Hilfe einer Skala von 0 bis 10 (1 = keine orange Farbintensität; 10 = sehr starke orange Farbintensität) vorgelegt. Die Ergebnisse sind in der folgenden **Tabelle 2** dargestellt:

**Tabelle 2**

| Farbprüfung | |
|---|---|
| **Formulierung** | **orange Farbintensität** |
| B1 | 7,2 |
| V1 | 3,6 |
| B2 | 7,6 |
| V2 | 3,4 |
| B3 | 7,7 |
| V3 | 3,3 |

Die Produkte B1 bis B3 wiesen eine deutlich höhere orange Farbintensität auf, als ihre jeweiligen Vergleichsmuster V1 bis V3.

### Formulierungsbeispiele B4 und V4

Die erfindungsgemäße Formulierung B1 und die Vergleichsrezeptur V1 wurden in eine Getränkepulverformulierung eingesetzt, wie sie in Tabelle 3 wiedergegeben ist.

**Tabelle 3**

| Getränkepulver (Mengenangaben in g) | | |
|---|---|---|
| **Inhaltsstoff** | **B4** | **V4** |
| Saccharose (kristallin) | 924,2 | 924,2 |
| Zitronensäure | 45,6 | 45,6 |
| Orangenaroma | 10,0 | 10,0 |
| Tricalciumphosphat | 8,0 | 8,0 |
| Trinatriumcitrat | 5,0 | 5,0 |
| Na-Carboxymethyxlcellulose | 0,9 | 0,9 |
| Xanthan | 0,9 | 0,9 |
| Gummi Arabicum | 1,0 | 1,0 |
| Farbstoffzusammensetzung nach Beispiel B1 | 2,0 | 0 |
| Farbstoffzusammensetzung nach Vergleichsbeispiel V1 | 0 | 2,0 |
| Ascorbinsäure | 2,4 | 2,4 |

Das Getränkepulver, das die Farbstoffzusammensetzung nach Beispiel B1 enthielt, war bei der Betrachtung intensiv orange gefärbt. In Wasser fand eine schnelle Dispergierung des Pulvers und das Auflösen der löslichen Komponenten statt, wobei ein intensiv orange gefärbtes Getränk mit intensiver Trübung ohne Graustich erhalten wurde.

Das Getränkepulver enthaltend die Farbstoffzusammensetzung nach dem Vergleichsbeispiel Beispiel V1 war bei der Betrachtung weniger intensiv orange gefärbt. In Wasser fand eine langsamere Dispergierung statt und auch löste sich diese Formulierung langsamer als das Getränkepulver enthaltend das Produkt B1 auf.

Portionen von jeweils 2 g der Getränkepulver B4 und V4 wurden in kleine Papiertütchen verpackt, in denen üblicherweise Zuckereinzelportionen verpackt werden und einem Lagertest unterzogen. Die Bedingungen des Lagertests sind 4 Wochen Lagerzeit bei 20°C in einem hell beleuchteten Raum. Die Papiertütchen werden dabei dem Licht ausgesetzt, um eine Präsentation im Supermarkt zu imitieren. Die Papiertütchen sind dabei zum Teil lichtdurchlässig. Die erfindungsgemäßen Getränkepulver werden in Wasser gelöst und dispergiert (1 Päckchen / 500 ml). Die Getränke, die die erfindungsgemäßen Getränkepulver B4 enthalten, schmecken ohne Fehlnoten frisch nach Orange. Die Getränke, die die vergleichenden Getränkepulver V4 enthalten, schmecken noch nach Orange, weisen jedoch Fehlnoten nach Abbauprodukten des Orangenaromas auf.

## Patentansprüche

1. Zusammensetzungen umfassend oder bestehend aus
(a) Titandioxid und
(b) mindestens einem Lebensmittelfarbstoff wodurch die Titandioxidpartikel wenigstens anteilig mit dem Lebensmittelfarbstoff beschichtet vorliegen, **dadurch gekennzeichnet, dass** die Zusammensetzungen erhältlich sind oder erhalten werden, indem man die Titandioxidpartikel und die Lebensmittelfarbstoffe in Gegenwart von Wasser einer Sprühtrocknung unterwirft.

2. Zusammensetzung nach Anspruch 1, **dadurch gekennzeichnet, dass** die Hülle keine Reduktionsmittel oder Säuren enthält.

3. Zusammensetzungen nach mindestens einem der Ansprüche 1 bis 2, **dadurch gekennzeichnet, dass** das Titandioxid in der Anataseform vorliegt.

4. Zusammensetzungen nach mindestens einem der Ansprüche 1 bis 3, **dadurch gekennzeichnet, dass** sie weiterhin mindestens ein Trübungsmittel enthalten.

5. Zusammensetzungen nach Anspruch 4, **dadurch gekennzeichnet, dass** sie Trübungsmittel enthalten, die ausgewählt sind aus der Gruppe, die gebildet wird von Erdalkaliphosphaten, Siliziumdioxid, Silikaten und deren Gemischen.

6. Zusammensetzungen nach mindestens einem der Ansprüche 1 bis 5, **dadurch gekennzeichnet, dass** sie weiterhin mindestens ein Bindemittel enthalten.

7. Zusammensetzungen nach Anspruch 6, **dadurch gekennzeichnet, dass** sie Bindemittel enthalten, die ausgewählt sind aus der Gruppe, die gebildet wird von Dextrinen, Maltodextrinen, Gummi Arabicum, Xanthan sowie deren Mischungen,

8. Zusammensetzungen nach mindestens einem der Ansprüche 1 bis 7, **dadurch gekennzeichnet, dass** sie
(a) etwa 10 bis etwa 85 Gew.-% Titandioxid,
(b) etwa 0,5 bis 20 Gew.-% Lebensmittelfarbstoff,
(c) 0 bis etwa 75 Gew.-% Trübungsmittel, und
(d) etwa 1 bis etwa 15 Gew.-% Bindemittel
mit der Maßgabe enthalten, dass sich die Mengenangaben gegebenenfalls mit Wasser zu 100 Gew.-% addieren.

9. Nahrungsmittel, enthaltend eine Formulierung nach mindestens einem der Ansprüche 1 bis 8.

10. Nahrungsmittel nach Anspruch 9, **dadurch gekennzeichnet, dass** es sich um eine flüssige Getränkezubereitung oder ein Getränkepulver handelt.

11. Zusammensetzungen nach mindestens einem der Ansprüche 1 bis 8 oder Nahrungsmittel nach mindestens einem der Ansprüche 9 bis 10, **dadurch gekennzeichnet, dass** sie Aromastoffe mit Ester-, Aldehyd- oder Lactonstruktur enthalten.

12. Portionsbehälter mit einem Fassungsvermögen von 0,5 bis 500 g enthaltend eine Zusammensetzung nach mindestens einem der Ansprüche 1 bis 11, **dadurch gekennzeichnet, dass** mindestens eine Wand des Portionsbehälters lichtdurchlässig ist.

13. Verfahren zur Herstellung einer Zusammensetzung nach mindestens einem der Ansprüche 1 bis 8, bei dem man Titandioxidpartikel und Lebensmittelfarbstoffe gegebenenfalls in Gegenwart von Wasser einer Sprühtrocknung unterwirft.

14. Verfahren zur Färbung von Lebensmitteln, bei dem man diese mit einer Zusammensetzung nach mindestens einem der Ansprüche 1 bis 8 vermischt und anschließend in einen Portionsbehälter nach Anspruch 12 abfüllt.

15. Verwendung einer Zusammensetzung nach mindestens einem der Ansprüche 1 bis 8 zur Färbung von Lebensmitteln.

## Claims

1. Compositions comprising or consisting of
a) titanium dioxide and
b) at least one food dye
whereby the titanium dioxide particles have a coating at least proportionally of the food dye, **characterized in that** the compositions are obtainable or obtained by subjecting the titanium dioxide particles and the food dyes to spray drying in the presence of water.

2. Composition according to Claim 1, **characterized in that** the shell contains no reducing agents or acids.

3. Compositions according to at least one of Claims 1 to 2, **characterized in that** the titanium dioxide is in the anatase form.

4. Compositions according to at least one of Claims 1 to 3, **characterized in that** they further comprise at least one opacifier.

5. Compositions according to Claim 4, **characterized in that** they comprise opacifiers selected from the group consisting of alkaline earth metal phosphates, silicon dioxide, silicates and mixtures thereof.

6. Compositions according to at least one of Claims 1 to 5, **characterized in that** they further comprise at least one binder.

7. Compositions according to Claim 6, **characterized in that** they comprise binders selected from the group consisting of dextrins, maltodextrins, gum arabic, xanthan and mixtures thereof.

8. Compositions according to at least one of Claims 1 to 7, **characterized in that** they comprise
(a) about 10 to about 85 wt% of titanium dioxide,
(b) about 0.5 to 20 wt% of food dye,
(c) 0 to about 75 wt% of opacifier(s) and
(d) about 1 to about 15 wt% of binder(s),
with the proviso that the quantity figures add up, optionally with water, to 100 wt%.

9. Foodstuff comprising a formulation according to at least one of Claims 1 to 8.

10. Foodstuff according to Claim 9, **characterized in that** it is a liquid beverage preparation or a beverage powder.

11. Compositions according to at least one of Claims 1 to 8 or foodstuffs according to at least one of Claims 9 to 10, **characterized in that** they comprise flavourings having ester, aldehyde or lactone structure.

12. Portion container having a capacity of 0.5 to 500 g, containing a composition according to at least one of Claims 1 to 11, **characterized in that** at least one wall of the portion container is translucent.

13. Method for producing a composition according to at least one of Claims 1 to 8 by subjecting titanium dioxide particles and food dyes, optionally in the presence of water, to spray drying.

14. Method for colouring foods, by mixing them with a composition according to at least one of Claims 1 to 8 and dispensing the mixture into a portion container according to Claim 12.

15. Use of a composition according to at least one of Claims 1 to 8 for colouring foods.

## Revendications

1. Compositions comprenant ou constituées par
(a) du dioxyde de titane et
(b) au moins un colorant alimentaire,
les particules de dioxyde de titane étant au moins partiellement revêtues par le colorant alimentaire, **caractérisées en ce que** les compositions peuvent être obtenues ou sont obtenues **en ce qu'**on soumet les particules de dioxyde de titane et les colorants alimentaires en présence d'eau à un séchage par pulvérisation.

2. Composition selon la revendication 1, **caractérisée en ce que** l'enveloppe ne contient pas d'agents de réduction ni d'acides.

3. Compositions selon au moins l'une quelconque des revendications 1 à 2, **caractérisées en ce que** le dioxyde de titane se trouve dans la forme anatase.

4. Compositions selon au moins l'une quelconque des revendications 1 à 3, **caractérisées en ce qu'**elles contiennent en outre au moins un opacifiant.

5. Compositions selon la revendication 4, **caractérisées en ce qu'**elles contiennent des opacifiants qui sont choisis dans le groupe formé par les phosphates de métal alcalino-terreux, le dioxyde de silicium, les silicates et leurs mélanges.

6. Compositions selon au moins l'une quelconque des revendications 1 à 5, **caractérisées en ce qu'**elles contiennent en outre au moins un liant.

7. Compositions selon la revendication 6, **caractérisées en ce qu'**elles contiennent des liants qui sont choisis dans le groupe formé par les dextrines, les maltodextrines, la gomme arabique, le xanthane ainsi que leurs mélanges.

8. Compositions selon au moins l'une quelconque des revendications 1 à 7, **caractérisées en ce qu'**elles contiennent
(a) environ 10 à environ 85% en poids de dioxyde de titane,
(b) environ 0,5 à 20% en poids de colorant alimentaire,
(c) 0 à environ 75% en poids d'opacifiant et
(d) environ 1 à environ 15% en poids de liant,
à condition que la somme des indications de quantités, le cas échéant avec l'eau, vaille 100% en poids.

9. Produit alimentaire contenant une formulation selon au moins l'une quelconque des revendications 1 à 8.

10. Produit alimentaire selon la revendication 9, **caractérisé en ce qu'**il s'agit d'une préparation liquide de boisson ou d'une boisson en poudre.

11. Compositions selon au moins l'une quelconque des revendications 1 à 8 ou produit alimentaire selon au moins l'une quelconque des revendications 9 à 10, **caractérisés en ce qu'**ils contiennent des arômes présentant une structure ester, aldéhyde ou lactone.

12. Récipient contenant une portion, présentant une capacité de contenance de 0,5 à 500 g, contenant une composition selon au moins l'une quelconque des revendications 1 à 11, **caractérisé en ce qu'**au moins une paroi du récipient contenant une portion est translucide.

13. Procédé pour la préparation d'une composition selon au moins l'une quelconque des revendications 1 à 8, dans lequel on soumet des particules de dioxyde de titane et des colorants alimentaires le cas échéant en présence d'eau à un séchage par pulvérisation.

14. Procédé pour la coloration d'aliments, dans lequel on mélange ceux-ci avec une composition selon au moins l'une quelconque des revendications 1 à 8 et on les transvase ensuite dans un récipient contenant une portion selon la revendication 12.

15. Utilisation d'une composition selon au moins l'une quelconque des revendications 1 à 8 pour la coloration d'aliments.
